# FASCICULE DE BREVET EUROPEEN

(11) **EP 3 589 590 B1**
(45) Date de publication et mention de la délivrance du brevet: **05.07.2023**
(21) Numéro de dépôt: 17712812.1
(22) Date de dépôt: 28.02.2017
(51) Int. Cl.: C03B 37/04, C22C 19/05, C22F 1/10, C03B 37/00

(54) **ALLIAGE POUR ASSIETTE DE FIBRAGE**
LEGIERUNG FÜR GLASFASERSPINNER
ALLOY FOR GLASS FIBER SPINNER

(43) Date de publication de la demande: 08.01.2020
(73) Titulaire: SAINT-GOBAIN SEVA, 71105 Chalon-sur-Saône (FR)
(72) Inventeur: XU, Yaxin, Tsukuba lbaraki 305-0047 (JP); YAN, JingBo, Tsukuba lbaraki 305-0047 (JP); SUN, Fei, Tsukuba lbaraki 305-0047 (JP); GU, Yuefeng, Tsukuba lbaraki 305-0047 (JP)
(74) Mandataire: Saint-Gobain Recherche
(86) Numéro de dépôt international: PCT/FR2017/050449
(87) Numéro de publication internationale: WO 2018/158509

(56) Documents cités:
- CN-A- 1 195 031
- CN-A- 106 244 856
- FR-A- 1 040 231
- JP-A- H08 290 933
- JP-A- 2004 099 968
- US-A- 4 203 748
- US-A1- 2007 107 811
- US-A1- 2007 292 303
- US-A1- 2010 244 310
- US-B1- 6 266 979

## Description

La présente invention concerne un alliage métallique pour utilisation à très haute température, notamment utilisable dans un procédé de fabrication de laine minérale par fibrage d'une composition minérale en fusion, ou plus généralement pour la constitution d'outils doués de résistance mécanique à haute température en milieu oxydant tel que le verre fondu, et des alliages à base de nickel utilisables à haute température, notamment pour la réalisation d'articles pour l'élaboration et/ou la transformation à chaud du verre ou autre matière minérale, tels que des organes de machines de fabrication de laine minérale.

Une technique de fibrage, dite par centrifugation interne, consiste à laisser tomber continûment du verre liquide à l'intérieur d'un ensemble de pièces de révolution tournant à très grande vitesse de rotation autour de leur axe vertical. Une pièce maîtresse, dénommée « assiette », plus souvent désignée dans la technique sous le terme anglais « spinner », reçoit le verre contre une paroi dite « bande » percée de trous, que le verre traverse sous l'effet de la force centrifuge pour s'en échapper de toutes parts sous la forme de filaments fondus. Un brûleur annulaire situé au-dessus de l'extérieur de l'assiette, produisant un courant de gaz descendant longeant la paroi extérieure de la bande, dévie ces filaments vers le bas en les étirant. Ceux-ci se « solidifient » ensuite sous la forme de laine de verre.

L'assiette est un outil de fibrage très sollicité thermiquement (chocs thermiques lors des démarrages et arrêts, et établissement en utilisation stabilisée d'un gradient de température le long de la pièce), mécaniquement (force centrifuge, érosion due au passage du verre) et chimiquement (oxydation et corrosion par le verre fondu, et par les gaz chauds sortant du brûleur autour de l'assiette). Ses principaux modes de détérioration sont : la déformation par fluage à chaud des parois verticales, l'apparition de fissures horizontales ou verticales, l'usure par érosion des orifices de fibrage, qui nécessitent le remplacement pur et simple des organes. Leur matériau constitutif se doit donc de résister pendant un temps de production suffisamment long pour rester compatible avec les contraintes techniques et économiques du procédé. On recherche à cet effet des matériaux doués d'une certaine ductilité, de résistance au fluage et résistance à la corrosion par le verre fondu et à l'oxydation à haute température.

Des superalliages à base de nickel renforcés par précipitation de carbures sont connus pour la réalisation de ces outils. FR 2675818 décrit par exemple de tels alliages. CN 106244856 décrit des compositions d'alliage à base de fer-nickel présentant une bonne résistance à la corrosion à haute température, notamment du fait de l'addition d'aluminium. CN 1195031 décrit des compositions d'alliage à base de chrome-nickel-tungstène comprenant du titane et des terres rares pour améliorer la résistance à haute température. JP H08-290933 décrit des compositions d'alliage à base de nickel présentant une résistance à la rupture en fluage à haute température par l'addition de 5 à 30% de cobalt. La présente invention vise à fournir des alliages à base de nickel encore améliorés, notamment du point de vue de la résistance au fluage, à la corrosion et/ou à l'oxydation. Les alliages selon l'invention présentent en particulier une meilleure stabilité de leurs propriétés à haute température, par exemple supérieure à 1000°C, voire supérieure à 1040°C. Un autre objectif de la présente invention est de fournir des alliages moins coûteux tout en maintenant, voire en améliorant, les propriétés de la résistance au fluage, à la corrosion et/ou à l'oxydation mentionnées ci-dessus.

Plus précisément, la présente invention a pour objet un alliage à base de nickel tel que défini à la revendication 1.

Par impuretés inévitables, on entend au sens de la présente invention que les éléments concernés ne sont pas présents de façon intentionnelle dans la composition de l'alliage mais qu'ils sont introduits sous la forme d'impuretés contenues dans au moins un des éléments principaux de l'alliage (ou dans au moins un des précurseurs desdits éléments principaux).

L'alliage selon la présente invention se différencie des alliages à base de nickel généralement utilisés pour de telles applications notamment en ce qu'il contient des carbures de niobium (NbC) et éventuellement de titane (TiC) ainsi qu'une quantité importante de fer. Cette combinaison permet d'obtenir un alliage présentant une bonne résistance mécanique, notamment au fluage, à haute température tout en abaissant le coût de l'alliage.

S'il est connu d'ajouter une certaine quantité de fer dans les alliages à base de nickel pour améliorer la résistance à la corrosion vis-à-vis du verre fondu, il est généralement considéré que l'ajout de fer dans des proportions importantes affecte leurs propriétés mécaniques et la résistance à l'oxydation, notamment à haute température. De façon inattendue et même au contraire de ce qu'on pouvait attendre, les propriétés des compositions d'alliage selon la présente invention, c'est-à-dire présentant une proportion de fer plus élevée que précédemment décrit, sont apparues équivalentes voire supérieures à celles des alliages précédemment décrits grâce à la présence de carbures de niobium. Le fer étant un élément bon marché, l'utilisation de 10 %, voire 12 % ou 15 %, à 25 %, voire 23 % ou 20 %, en poids de fer dans l'alliage est avantageuse pour réduire le coût de l'alliage final sans affecter les propriétés de l'alliage. L'alliage peut comprendre par exemple de 12 à 25 %, 15 à 25 %, 10 à 23 %, 12 à 23 %, 15 à 23 %, 10 à 20 %, 12 à 20 % ou 15 à 20 % en poids de fer.

Le carbone est un constituant essentiel de l'alliage, nécessaire à la formation des précipités de carbures métalliques. En particulier, la teneur en carbone détermine directement la quantité de carbures présente dans l'alliage. Elle est d'au moins 0,2 % en poids pour obtenir le renfort minimum désiré, de préférence d'au moins 0,6 % en poids, mais préférentiellement limitée à au plus 1,2 % en poids, de préférence d'au plus 1 % en poids, pour éviter que l'alliage ne devienne dur et difficile à usiner en raison d'une trop grande densité de renforts. Le manque de ductilité de l'alliage à de telles teneurs l'empêche d'accommoder sans se rompre une déformation imposée (par exemple d'origine thermique) et de résister suffisamment à la propagation des fissures. L'alliage peut comprendre par exemple 0,6 à 1,2 %, 0,2 à 1 % ou 0,6 à 1 % en poids de carbone.

De façon déjà décrite, le chrome contribue à la résistance mécanique intrinsèque de la matrice dans laquelle il est présent en partie en solution solide, et dans certains cas aussi sous forme de carbures essentiellement de type Cr₂₃C₆ en dispersion fine à l'intérieur des grains où ils apportent une résistance au fluage intragranulaire ou sous forme de carbures de type Cr₇C₃ ou Cr₂₃C₆ présents aux joints de grains, qui empêchent le glissement grain sur grain contribuant ainsi également au renforcement intergranulaire de l'alliage. Le chrome contribue à la résistance à la corrosion en tant que précurseur d'oxyde de chrome formant une couche protectrice à la surface exposée au milieu oxydant. Une quantité minimale de chrome est nécessaire pour la formation et le maintien de cette couche protectrice. Une teneur en chrome trop élevée est cependant néfaste à la résistance mécanique et à la ténacité aux températures élevées, car elle conduit à une rigidité trop élevée et une aptitude à l'allongement sous contrainte trop faible incompatible avec les contraintes à haute température. De façon générale, la teneur en chrome d'un alliage utilisable selon l'invention est de 20 %, voire 22 % ou 23 %, à 35 %, voire 30 % ou 28 %, en poids de l'alliage. L'alliage peut comprendre par exemple de 22 à 35 %, 23 à 35 %, 20 à 30 %, 22 à 30 %, 23 à 30 %, 20 à 28 %, 22 à 28 % ou 23 à 28 % en poids de chrome.

Le niobium, de même que le titane, contribue à la résistance mécanique de l'alliage, notamment à la résistance au fluage, à haute température, par exemple supérieure à 1000°C, voire supérieur à 1040°C. Les carbures de chrome ont en effet tendance à se dissoudre à des températures supérieures à 1000°C. La présence de carbures de niobium et de titane, plus stables que les carbures de chrome à haute température, permet d'assurer la résistance mécanique de l'alliage à haute température. La teneur en niobium est généralement de 0,5 %, voire 0,7 %, à 2,5 %, voire 2,0 % ou même 1,7 % en poids de l'alliage. L'alliage peut comprendre par exemple 0,7 à 2,5 %, 0,5 à 2,0 %, 0,7 à 2,0 %, 0,5 à 1,7 % ou 0,7 à 1,7 % en poids de niobium. Le ratio (Nb+Ti)/C en poids est de préférence de 1 à 2, plus préférentiellement de 1,5 à 2.

Une teneur en titane jusqu'à 1 % en poids contribue également à la résistance mécanique de l'alliage à haute température par la formation de carbures de titane. Il a cependant été remarqué que la présence de titane pouvait affecter la résistance à l'oxydation de l'alliage. Ainsi, la teneur en titane est de préférence inférieure à 0,5 %, voire inférieure à 0,4 % en poids. Dans un mode de réalisation particulièrement préféré, l'alliage ne comprend pas de titane autrement que sous forme d'impureté inévitable, c'est-à-dire à des teneurs inférieures à 0,1 %, voire inférieure à 0,05 % ou même inférieure à 0,01 % en poids de l'alliage. Le cobalt, présent dans l'alliage sous forme d'une solution solide avec le nickel, contribue à la résistance à la corrosion et à la résistance mécanique de l'alliage. Le cobalt étant un élément onéreux, il est généralement présent dans une quantité inférieure à 4 %, voire inférieure à 3 %, voire même inférieure à 2 % ou 1 % en poids de l'alliage pour ne pas augmenter le coût de l'alliage final. Le plus généralement, les essais effectués par le demandeur ont montré que le cobalt était quasiment toujours présent sous la forme d'impureté inévitable à hauteur d'au moins 0,3 % en poids et le plus souvent d'au moins 0,5 % en poids, voire d'au moins 0,7 % en poids. Des pourcentages de cobalt dans l'alliage inférieurs à 0,3 % en poids doivent cependant également être considérés comme compris dans le cadre de l'invention.

Le tungstène contribue à la dureté de l'alliage et à sa résistance au fluage. Il est généralement présent dans une quantité de 2 %, voire 3 % ou 4 %, à 10 %, voire 9 % ou 6 %, en poids de l'alliage. L'alliage peut comprendre par exemple de 3 à 10 %, 4 à 10 %, 2 à 9 %, 3 à 9 %, 4 à 9 %, 2 à 6 %, 3 à 6 % ou 4 à 6 % en poids de tungstène.

L'alliage peut contenir d'autres éléments dans des proportions minoritaires ou sous forme d'impuretés inévitables. Il comporte en général :
- du silicium en tant que désoxydant du métal fondu lors de l'élaboration et du moulage de l'alliage, à raison de moins de 0,9 %, voire moins de 0,6 % en poids;
- du manganèse également désoxydant, à raison de moins de 0,9 %, voire moins de 0,6 % en poids;

La quantité cumulée des autres éléments introduits à titre d'impuretés avec les constituants essentiels de l'alliage (« impuretés inévitables ») représente avantageusement moins de 1% en poids de la composition de l'alliage.

Les alliages selon l'invention sont exempts de Ce, La, B, Y, Dy, Re et autres terres rares, aux impuretés inévitables près.

L'alliage selon la présente invention se distingue également de certains alliages à base de nickel généralement utilisés pour la fabrication d'assiette de fibrage en ce qu'il ne contient pas d'aluminium autre que sous forme d'impureté inévitable, c'est-à-dire à des teneurs inférieures à 0,05 % ou même inférieures à 0,01 % en poids. Il a en effet été remarqué que la présence d'aluminium dans l'alliage, même à de faible quantité de l'ordre de 0,1 % en poids, pouvait affecter de façon importante sa résistance à la corrosion vis-à-vis du verre fondu.

L'alliage selon l'invention est également exempt de molybdène, hormis sous forme d'impureté inévitable, c'est-à-dire à des teneurs inférieures à 0,1 %, voire inférieures à 0,05 % ou même inférieures à 0,01 % en poids. En effet, bien que le molybdène soit connu pour procurer une excellente résistance à la corrosion aux alliages à base de nickel, il a été observé que, même à de faibles teneurs, celui-ci pouvait affecter considérablement leur résistance à l'oxydation.

Dans un mode de réalisation particulier, l'alliage selon l'invention comprend :

| | | | |
|---|---|---|---|
| Cr | 22 à 30 %, | de préférence | 23 à 28 % |
| Fe | 12 à 23 %, | de préférence | 15 à 20 % |
| W | 3 à 9 %, | de préférence | 3 à 6 % |
| Nb | 0,5 à 2,5 %, | de préférence | 0,7 à 1,7 %, |
| C | 0,7 à 1 % | | |
| Co | moins de 5 % | | |
| Si | moins de 0,9 % | | |
| Mn | moins de 0,9 % | | |

et ne comprend pas de titane autrement que sous forme d'impuretés inévitables, le reste étant constitué par du nickel et des impuretés inévitables.

Les alliages utilisables selon l'invention, qui contiennent des éléments hautement réactifs, peuvent être mis en forme par fonderie, notamment par fusion inductive sous atmosphère au moins partiellement inerte et coulée en moule de sable.

La coulée peut éventuellement être suivie d'un traitement thermique.

L'invention a également pour objet un procédé de fabrication d'un article par fonderie à partir des alliages décrits précédemment comme objet de l'invention.

Le procédé comprend généralement une étape de traitement thermique adéquat permettant l'obtention de carbures secondaires et leur répartition homogène dans la matrice métallique tel que décrit dans FR 2675818. Le traitement thermique est réalisé à une température inférieure à 1000°C, voire inférieure à 950°C, par exemple de 800°C à 900°C, pendant une durée d'au moins 5 heures, voire au moins 8 heures, par exemple de 10 à 20 heures.

Le procédé peut comprendre au moins une étape de refroidissement, après la coulée et/ou après ou au courant d'un traitement thermique, par exemple par refroidissement à l'air, notamment avec un retour à la température ambiante.

Les alliages objets de l'invention peuvent être utilisés pour fabriquer toutes sortes de pièces sollicitées mécaniquement à haute température et/ou amenées à travailler en milieu oxydant ou corrosif. L'invention a encore pour objets de tels articles fabriqués à partir d'un alliage selon l'invention, notamment par fonderie.

Parmi de telles applications on peut citer notamment la fabrication d'articles utilisables pour l'élaboration ou la transformation à chaud du verre, par exemple des assiettes de fibrage pour la fabrication de laine minérale.

Ainsi l'invention a-t-elle également pour objet un procédé de fabrication de laine de minérale par centrifugation interne, dans lequel on déverse un débit de matière minérale en fusion dans une assiette de fibrage dont la bande périphérique est percée d'une multitude d'orifices par lesquels s'échappent des filaments de matière minérale fondue qui sont ensuite étirés en laine sous l'action d'un gaz, la température de la matière minérale dans l'assiette étant d'au moins 900°C, voire au moins 950°C ou au moins 1000°C, voire même au moins 1040°C, et l'assiette de fibrage étant constituée d'un alliage tel que défini ci-dessus.

Les alliages selon l'invention permettent donc de fibrer une matière minérale fondue ayant une température de liquidus (T_{liq}) de 800°C ou plus, par exemple de 850°C, voire 900°C à 1030°C, voire 1000°C, ou même 950°C.

En général, le fibrage de ces matières minérales peut être effectué dans une plage de températures (pour la matière fondue parvenant dans l'assiette) comprise entre T_{liq} et T_{log3} où T_{log3} est la température à laquelle la composition fondue présente une viscosité de 100 Pa.s, typiquement de l'ordre de inférieure à 1200°C, voire inférieure à 1150°C, de préférence entre 1020 et 1100°C, voire entre 1050 et 1080°C. L'écart entre T_{log3} et T_{liq} est en général supérieur à 50°C.

La composition de la matière minérale à fibrer n'est pas particulièrement limitée du moment qu'elle peut être fibrée par un procédé de centrifugation interne. Elle peut varier en fonction des propriétés souhaitées pour les fibres minérales produites, par exemple les propriétés de biosolubilité, de résistance au feu ou d'isolation thermique. La matière à fibrer est de préférence une composition de verre de type boro-silico-sodo-calcique. Elle peut présenter notamment une composition qui renferme les constituants ci-après, dans les proportions pondérales définies par les limites suivantes :

| | |
|---|---|
| SiO₂ | 35 à 80%, |
| Al₂O₃ | 0 à 30%, |
| CaO+MgO | 2 à 35%, |
| Na₂O+K₂O | 0 à 20%, |

étant entendu qu'en général,
SiO₂+Al₂O₃ est compris dans le domaine allant de 50 à 80% en poids et que Na₂O+K₂O+B₂O₃ est compris dans le domaine allant de 5 à 30% en poids.

La matière à fibrer peut notamment présenter une la composition suivante:

| | |
|---|---|
| SiO₂ | 50 à 75%, |
| Al₂O₃ | 0 à 8%, |
| CaO+MgO | 2 à 20%, |
| Fe₂O₃ | 0 à 3%, |
| Na₂O+K₂O | 12 à 20%, |
| B₂O₃ | 2 à 10%. |

La matière à fibrer peut être élaborée à partir de constituants purs, mais est généralement obtenue par fusion d'un mélange de matières premières naturelles apportant différentes impuretés.

Bien que l'invention ait été décrite principalement dans ce cadre de la fabrication de laine minérale, elle peut être appliquée à l'industrie verrière en général pour réaliser des éléments ou accessoires de four, de filière, ou de feeder notamment pour la production de fils de verre textile, de verre d'emballage...

En dehors de l'industrie verrière, l'invention peut s'appliquer à la fabrication d'articles très divers, lorsque ceux-ci doivent présenter une résistance mécanique élevée en milieu oxydant et/ou corrosif, en particulier à haute température.

Les exemples qui suivent, nullement restrictifs des compositions selon l'invention ou des conditions de la mise en oeuvre des assiettes de fibrage selon l'invention, illustrent les avantages de la présente invention.

### EXEMPLE

Par la technique de fusion inductive sous atmosphère inerte (notamment argon) on prépare une charge fondue des compositions I1, I2 (selon l'invention) et C1 (selon FR 2675818) indiquées dans le tableau 1 que l'on met ensuite en forme par simple coulée en moule de sable. Le tableau 1 indique les proportions en pourcentage en poids de chaque élément dans l'alliage, le complément à 100% étant constitué par le nickel et les impuretés inévitables.

**Tableau 1**

| | I1 | I2 | C1 |
|---|---|---|---|
| Cr | 25 | 25 | 28,5-29,5 |
| Fe | 17 | 17 | 4-9 |
| W | 5 | 5 | 7,2-7,6 |
| Nb | 1,5 | 1 | * |
| Ti | * | 0,5 | * |
| C | 0,9 | 0,9 | 0,69-0,73 |
| Co | 3 | 3 | * |

| | | | |
|---|---|---|---|
| * éventuellement présent sous forme d'impureté inévitable | | | |

La coulée est suivie par un traitement thermique de précipitation des carbures secondaires pendant 12 heures à 865°C, se finissant par un refroidissement à l'air jusqu'à la température ambiante.

De cette manière, des lingots de 150* 100*25 mm ont été fabriqués.

Les propriétés de résistance au fluage, à l'oxydation et à la corrosion des alliages I1, I2 et C1 ont ensuite été évaluées.

La résistance au fluage a été mesurée par un test de fluage-traction sur des éprouvettes cylindriques de 3,0 mm de diamètre, de longueur totale de 60,0 mm et 20,0 mm de longueur entre repères. Les tests ont été réalisés à 1000°C (température normale de fonctionnement d'une assiette) et 1050°C, sous des charges de 31 MPa (correspondant à une sollicitation normale de l'assiette), 63 MPa (correspondant à une sollicitation extrême de l'assiette) et 100 MPa. Le tableau 2 indique le temps (t), en heures, et l'élongation (E), en pourcentage, avant rupture.

La résistance à l'oxydation dépend d'une part de la cinétique d'oxydation de l'alliage et d'autre part de la qualité d'adhésion de la couche d'oxyde formée sur la surface de l'alliage. Une mauvaise adhésion de la couche d'oxyde à la surface de l'alliage accélère en effet l'oxydation de celui-ci : lorsque la couche d'oxyde se détache, une surface d'alliage non oxydée est alors exposée directement à l'oxygène de l'air, ce qui provoque la formation d'une nouvelle couche d'oxyde, à son tour susceptible de se détacher, propageant ainsi l'oxydation. Au contraire, lorsque la couche d'oxyde reste adhérente à la surface de l'alliage, elle forme une couche barrière qui limite voire stoppe la progression de l'oxydation. Les constantes des vitesses d'oxydation, exprimée en mg.cm⁻².h^{-1/2}, ont été calculées à partir du suivi de gain de masse résultant de l'oxydation d'échantillons placés à 1000°C pendant 50h dans un four équipé d'une microbalance sous flux d'air. Pour évaluer la qualité d'adhésion de la couche d'oxyde, des échantillons logés dans des creusets individuels ont été placés dans un four à 1000°C sous flux d'air pendant respectivement 5, 10, 24, 36 et 50 heures. La présence de poudre au fond du creuset indique un décollement de la couche d'oxyde. Le tableau 2 indique la quantité de poudre observée dans le creuset pour chacun des échantillons (Ⓞ: absence de poudre ; O : peu de poudre ; ⊗: beaucoup de poudre). Plus la quantité de poudre est importante, moins la couche d'oxyde est adhérente.

**Tableau 2**

| | | | I1 | I2 | C1 |
|---|---|---|---|---|---|
| Fluage | 1000°C | 31 MPa | 1293,6/1,40 | 1310/1,50 | 567,8/5,55 |
| t(h)/E(%) | | 63 MPa | 32,9/6,7 | 33,0/37,5 | 9,05/17,8 |
| | | 100 MPa | 1,57/22,8 | 0,93/48,8 | 0,5/40,9 |
| | 1050°C | 63 MPa | 5,78/10,7 | 4,23/37 | 1,87/33,2 |
| Oxydation | Constante de cinétique | | 0,31 | 0,42 | 0,28 |
| | Adhésion de la couche d'oxyde | 5h | Ⓞ | Ⓞ | Ⓞ |
| | | 10h | Ⓞ | Ⓞ | ○ |
| | | 24h | Ⓞ | Ⓞ | ○ |
| | | 36h | Ⓞ | ○ | ⊗ |
| | | 50h | Ⓞ | ○ | ⊗ |

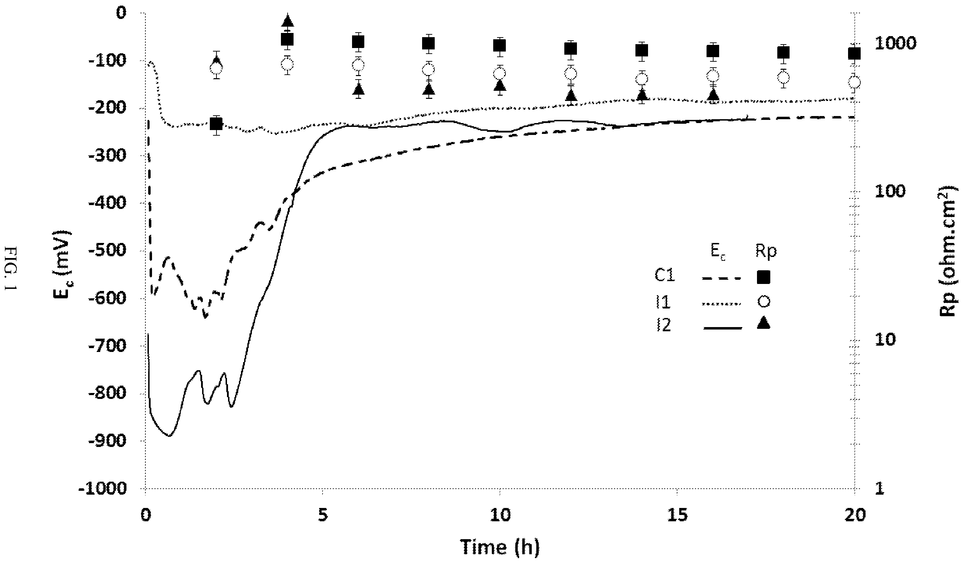

Les essais de résistance à la corrosion sont réalisés à l'aide d'un montage à trois électrodes immergées dans un creuset en platine-rhodié contenant le verre fondu. Le creuset en platine rhodié est utilisé comme contre-électrode. L'électrode de comparaison est classiquement l'électrode de zircone stabilisée alimentée en air. Les échantillons cylindriques d'alliages à évaluer, préalablement oxydés à l'air pendant 2h à 1000°C, sont scellé par du ciment de zircone à une gaine d'alumine pour former l'électrode de travail. L'échantillon constituant l'électrode de travail est monté sur un axe tournant afin de représenter les efforts de friction du verre sur la surface de l'alliage et immergé dans le verre fondu à 1000°C (composition en pourcentage en poids : SiO₂ 65,6 ; Al₂O₃ 1,7 ; Na₂O 16,4 ; K₂O 0,7 CaO 7,4 ; MgO 3,1 ; B₂O₃ 4,8). La résistance des alliages à la corrosion par le verre est évaluée en mesurant et la résistance de polarisation (Rp). Pour mesurer le potentiel de corrosion (E_{c}), aucun courant n'est imposé entre l'électrode de travail et la contre-électrode et le potentiel mesuré entre l'électrode de travail et l'électrode de comparaison est celui du couple métal/verre à la température donnée. Cette information thermodynamique permet de déterminer les réactions de corrosion et le caractère passivable du métal étudié. La mesure de la résistance de polarisation (Rp) est obtenue en faisant varier périodiquement le potentiel électrique au voisinage du potentiel E_{c} et en mesurant l'évolution de la densité de courant résultant. La pente de la courbe intensité-potentiel enregistrée sur ce domaine est inversement proportionnelle à Rp. Plus Rp (exprimée en ohm.cm²) est grande, plus le matériau est résistant à la corrosion, la vitesse de dégradation étant inversement proportionnelle à Rp. La détermination de Rp permet ainsi d'évaluer, au moins comparativement, la vitesse de corrosion des alliages. Les résultats sont présentés à la Fig. 1.

Par la comparaison des données reportées dans le tableau 2 et à la Fig.1, on observe, pour les alliages I1 et I2 selon l'invention, une résistance au fluage et à l'oxydation significativement améliorées par rapport à l'alliage C1 et une résistance à la corrosion sensiblement équivalente à celle de l'alliage C1. L'alliage I1 ne comprenant pas de titane montre par ailleurs un comportement sensiblement meilleur que l'alliage I2 vis-à-vis de la résistance à l'oxydation.

## Revendications

1. Alliage, **caractérisé en ce qu'**il contient les éléments suivants, les proportions étant indiquées en pourcentage pondéral de l'alliage :
| | |
|---|---|
| Cr | 20 à 35 % |
| Fe | 10 à 25 % |
| W | 2 à 10 % |
| Nb | 0,5 à 2,5 % |
| Ti | 0 à 1 % |
| C | 0,2 à 1,2 % |
| Co | moins de 4 % |
| Si | moins de 0,9 % |
| Mn | moins de 0,9 % |
le reste étant constitué par du nickel et des impuretés inévitables, l'alliage étant exempt de Ce, La, B, Y, Dy, Re et autres terres rares, et ne contenant pas d'aluminium autre que sous forme d'impureté inévitable à des teneurs inférieures à 0,05 %, ni de molybdène autre que sous forme d'impureté inévitable à des teneurs inférieures à 0,1 %.

2. Alliage selon la revendication 1, **caractérisé en ce qu'**il comprend moins de 0,5 % poids de Ti, de préférence moins de 0,4 % poids de Ti.

3. Alliage selon l'une des revendications 1 ou 2, **caractérisé en ce qu'**il ne comprend pas de titane autrement que sous forme d'impuretés inévitables.

4. Alliage selon l'une des revendications précédentes, **caractérisé en ce qu'**il comprend entre 0,7 % et 1 % en poids de carbone.

5. Alliage selon l'une des revendications précédentes, **caractérisé en ce que** le ratio (Nb+Ti)/C est de 1 à 2, de préférence de 1,5 à 2.

6. Alliage selon l'une des revendications précédentes, **caractérisé en ce qu'**il comprend entre 22 et 30 % en poids de chrome, de préférence entre 23 et 28 % en poids de chrome.

7. Alliage selon l'une des revendications précédentes, **caractérisé en ce qu'**il comprend entre 15 et 20 % en poids de fer.

8. Alliage selon l'une des revendications précédentes, caractérisé en ce **caractérisé en ce qu'**il comprend de 0,5 à 2,0 %, de préférence de 0,7 à 1,7 % en poids de niobium.

9. Alliage selon l'une des revendications précédentes, **caractérisé en ce qu'**il comprend de 3 à 9 % en poids de tungstène, de préférence de 3 à 6 % en poids de tungstène.

10. Alliage selon l'une des revendications précédentes, **caractérisé en ce qu'**il comprend moins de 3 % en poids de cobalt et de préférence moins de 1 % en poids de cobalt.

11. Article pour la fabrication de laine minérale réalisé en un alliage selon l'une quelconque des revendications 1 à 10, notamment par fonderie.

12. Assiette de fibrage pour la fabrication de laine minérale réalisé en un alliage selon l'une quelconque des revendications 1 à 10, notamment par fonderie.

13. Procédé de fabrication de laine minérale par centrifugation interne, dans lequel on déverse un débit de matière minérale en fusion dans une assiette de fibrage selon la revendication 12, l'assiette de fibrage ayant subi un traitement thermique à une température inférieure à 1000°C pendant une durée d'au moins 5 heures, et dont la bande périphérique est percée d'une multitude d'orifices par lesquels s'échappent des filaments de matière minérale fondue qui sont ensuite étirés en laine sous l'action d'un gaz, la température de la matière minérale dans l'assiette étant d'au moins 1000°C.

## Patentansprüche

1. Legierung, **dadurch gekennzeichnet, dass** sie die folgenden Elemente enthält, wobei die Anteile in Gewichtsprozent der Legierung angegeben sind:
| | |
|---|---|
| Cr | 20 bis 35 % |
| Fe | 10 bis 25 % |
| W | 2 bis 10 % |
| Nb | 0,5 bis 2,5 % |
| Ti | 0 bis 1 % |
| C | 0,2 bis 1,2 % |
| Co | weniger als 4 % |
| Si | weniger als 0,9 % |
| Mn | weniger als 0,9 % |
wobei der Rest aus Nickel und unvermeidbaren Verunreinigungen besteht, wobei die Legierung frei von Ce, La, B, Y, Dy, Re und anderen Seltenerden ist und kein Aluminium, außer in Form von unvermeidbarer Verunreinigung mit Gehalten unter 0,05 %, ebenso wenig Molybdän, außer in Form von unvermeidbarer Verunreinigung mit Gehalten unter 0,1 %, enthält.

2. Legierung nach Anspruch 1, **dadurch gekennzeichnet, dass** sie zu weniger als 0,5 Gew.-% Ti, vorzugsweise zu weniger als 0,4 Gew.-% Ti umfasst.

3. Legierung nach einem der Ansprüche 1 oder 2,
**dadurch gekennzeichnet, dass** sie kein Titan, außer in Form von unvermeidbaren Verunreinigungen, umfasst.

4. Legierung nach einem der vorstehenden Ansprüche,
**dadurch gekennzeichnet, dass** sie zu zwischen 0,7 Gew.-% und 1 Gew.-% Kohlenstoff umfasst.

5. Legierung nach einem der vorstehenden Ansprüche,
**dadurch gekennzeichnet, dass** das Verhältnis (Nb + Ti)/C von 1 bis 2, vorzugsweise von 1,5 bis 2 beträgt.

6. Legierung nach einem der vorstehenden Ansprüche,
**dadurch gekennzeichnet, dass** sie zu zwischen 22 und 30 Gew.-% Chrom, vorzugsweise zu zwischen 23 und 28 Gew.-% Chrom umfasst.

7. Legierung nach einem der vorstehenden Ansprüche,
**dadurch gekennzeichnet, dass** sie zu zwischen 15 und 20 Gew.-% Eisen umfasst.

8. Legierung nach einem der vorstehenden Ansprüche,
**dadurch gekennzeichnet, dass** sie zu 0,5 bis 2,0 Gew.-%, vorzugsweise zu 0,7 bis 1,7 Gew.-% Niob umfasst.

9. Legierung nach einem der vorstehenden Ansprüche,
**dadurch gekennzeichnet, dass** sie zu 3 bis 9 Gew.-% Wolfram, vorzugsweise zu 3 bis 6 Gew.-% Wolfram umfasst.

10. Legierung nach einem der vorstehenden Ansprüche,
**dadurch gekennzeichnet, dass** sie zu weniger als 3 Gew.-% Kobalt und vorzugsweise zu weniger als 1 Gew.-% Kobalt umfasst.

11. Artikel für die Herstellung von Mineralwolle, der aus einer Legierung nach einem der Ansprüche 1 bis 10 insbesondere durch Gießen gefertigt ist.

12. Zerfaserungsscheibe für die Herstellung von Mineralwolle, die aus einer Legierung nach einem der Ansprüche 1 bis 10 insbesondere durch Gießen gefertigt ist.

13. Verfahren zum Herstellen von Mineralwolle durch interne Zentrifugation, wobei ein Durchfluss von schmelzflüssigem Mineralmaterial in eine Zerfaserungsscheibe nach Anspruch 12 abgelassen wird, wobei die Zerfaserungsscheibe einer thermischen Behandlung bei einer Temperatur unter 1000 °C während einer Dauer von mindestens 5 Stunden unterzogen wurde, und deren Umfangsstreifen durch eine Vielzahl von Öffnungen durchdrungen wird, durch die Fäden aus geschmolzenem Mineralmaterial entweichen, die dann unter Einwirkung von Gas zu Wolle gedehnt werden, wobei die Temperatur des Mineralmaterials in der Scheibe mindestens 1000 °C beträgt.

## Claims

1. An alloy, **characterized in that** it contains the following elements, the proportions being shown as percentage by weight of the alloy:
| | |
|---|---|
| Cr | 20 to 35% |
| Fe | 10 to 25% |
| W | 2 to 10% |
| Nb | 0.5 to 2.5% |
| Ti | 0 to 1% |
| C | 0.2 to 1.2% |
| Co | less than 4% |
| Si | less than 0.9% |
| Mn | less than 0.9% |
the remainder consisting of nickel and unavoidable impurities, the alloys being devoid of Ce, La, B, Y, Dy, Re and other rare earth metals, and does not contain aluminum other than in the form of unavoidable impurity at contents of less than 0.05%, nor molybdenum other than in the form of unavoidable impurity at contents of less than 0.1%,.

2. The alloy as claimed in claim 1, **characterized in that** it comprises less than 0.5% by weight of Ti, preferably less than 0.4% by weight of Ti.

3. The alloy as claimed in either of claims 1 and 2, **characterized in that** it does not comprise titanium other than in the form of unavoidable impurities.

4. The alloy as claimed in one of the preceding claims, **characterized in that** it comprises between 0.7% and 1% by weight of carbon.

5. The alloy as claimed in one of the preceding claims, **characterized in that** the (Nb+Ti)/C ratio is from 1 to 2, preferably from 1.5 to 2.

6. The alloy as claimed in one of the preceding claims, **characterized in that** it comprises between 22 and 30% by weight of chromium, preferably between 23 and 28% by weight of chromium.

7. The alloy as claimed in one of the preceding claims, **characterized in that** it comprises between 15 and 20% by weight of iron.

8. The alloy as claimed in one of the preceding claims, **characterized in that** it comprises from 0.5 to 2.0%, preferably from 0.7 to 1.7%, by weight of niobium.

9. The alloy as claimed in one of the preceding claims, **characterized in that** it comprises from 3 to 9% by weight of tungsten, preferably from 3 to 6% by weight of tungsten.

10. The alloy as claimed in one of the preceding claims, **characterized in that** it comprises less than 3% by weight of cobalt and preferably less than 1% by weight of cobalt.

11. An article for the manufacture of mineral wool made of an alloy as claimed in any one of claims 1 to 10, in particular by founding.

12. A fiberizing spinner for the manufacture of mineral wool made of an alloy as claimed in any one of claims 1 to 10, in particular by founding.

13. A process for the manufacture of mineral wool by internal centrifugation, in which a flow of molten mineral material is poured into a fiberizing spinner as claimed in claim 12, wherein the fiberizing spinner has been submitted to a heat treatment carried out at a temperature of less than 1000°C for at least 5 hours, the peripheral band of which is pierced with a multitude of orifices through which filaments of molten mineral material escape, which filaments are subsequently drawn to give wool under the action of a gas, the temperature of the mineral material in the spinner being at least 1000°C.
